# EUROPEAN PATENT SPECIFICATION

(11) **EP 1 495 170 B1**
(45) Date of publication and mention of the grant of the patent: **23.12.2009**
(21) Application number: 02788974.0
(22) Date of filing: 20.11.2002
(51) Int. Cl.: D01D 5/26, D01D 5/00

(54) **APPARATUS AND METHOD FOR PREPARING NANOFIBERS VIA ELECTRO-BLOWN SPINNING PROCESS**
VORRICHTUNG UND VERFAHREN ZUR HERSTELLUNG VON NANOFASERN DURCH ELEKTROBLASSPINNEN
DISPOSITIF DE FABRICATION ET PROCEDE DE PREPARATION DE NANOFIBRES PAR UN PROCESSUS DE FILAGE PAR ELECTRO-SOUFFLAGE

(30) Priority: 26.03.2002 KR 2002016489
(43) Date of publication of application: 12.01.2005
(73) Proprietor: E.I. DU PONT DE NEMOURS AND COMPANY, Wilmington, DE 19898 (US)
(72) Inventor: KIM, Yong Min, Ilsan-ku, Koyang-si, Kyeonggi-do 411-370 (KR); SUNG, Young Bin, Hwaseong-si, Gyeonggi-do 445-974 (KR); JANG, Rai Sang, Sa-dong, Ansan-si, Kyeonggi-do 425-170 (KR); AHN, Kyoung Ryoul, Ansan-si, Kyeonggi-do 425-020 (KR)
(74) Representative: Thomson, James B.
(86) International application number: PCT/KR2002/002165
(87) International publication number: WO 2003/080905

(56) References cited:
- WO-A-02/074189
- KR-A- 2001 097 747
- US-A- 6 110 590
- US-B1- 6 308 509
- SEUNG-GOO LEE: 'Nanofiber formation of poly(etherimidine) under various electrospinning conditions' JOURNAL OF THE KOREAN FIBER SOCIETY vol. 39, no. 1, 2002, pages 1 - 13, XP008072104

## Description

The present invention relates to a nanofiber web preparing apparatus and method using electro-blown spinning, in particular in which both thermoplastic and thermosetting resins are applicable, the polymer solution doesn't need to be heated and insulation is readily realized. Herein, "electro-blown" means injecting compressed air while applying a high voltage during spinning of nanofiber, and "electro-blown spinning" means spinning using an electro-blown method.

In general, consumption of non-woven cloth is gradually increasing owing to various applications of non-woven cloth, and manufacturing processes of non-woven cloth are also variously developing.

A variety of studies have been carried out in many countries including the USA for developing technologies for manufacturing non-woven cloth composed of ultra-fine nanofiber (hereinafter it will be referred to as 'nanofiber web') which is advanced for one stage over conventional super-fine fiber. Such technologies are still in their initial stage without any commercialization while conventional technologies remain in a stage
in which super-fine fibers are prepared with a diameter of about several micrometer. Nanofiber having a diameter of about several nanometer to hundreds of nanometer cannot be prepared according to conventional super-fine fiber technologies. Nanofiber has a surface area per unit volume, which is incomparably larger than that of conventional super-fine fiber. Nanofiber having various surface characteristics, structures and combined components can be prepared so as to overcome the limitations in physical properties of articles made of conventional super-fine fiber while creating articles having new new performance.

It is well known that a nanofiber web using the above nanofiber preparing method can be used used as an ultra precise filter, electric-electronic industrial material, medical biomaterial, high-performance composite, etc.

The technologies in use for preparing ultra-fine fiber up to the present can be classified into three methods including flash spinning, electrostatic spinning and melt-blown spinning. Such technologies are disclosed in Korean Laid-Open Patent Application Serial Nos. 10-2001-31586 and 10-2001-31587, entitled "Preparing Method of Ultra-Fine Single Fiber".

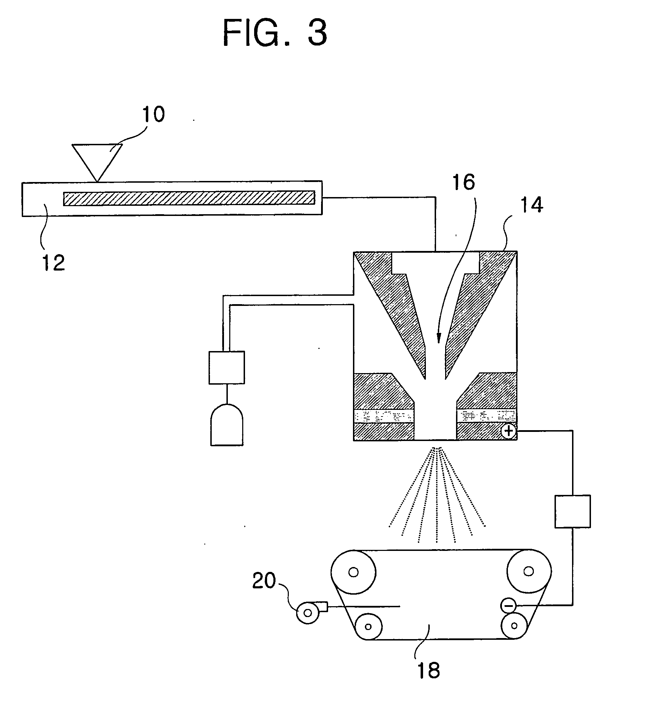

Korean Laid-Open Patent Application Serial No. 10-2001-31586 discloses that nanofiber in nanometer scale can be mass-produced with high productivity and yield by systematically combining the melt-blown spinning and the electrostatic spinning. Fig. 3 schematically shows a process for explaining this technology. Referring to Fig. 3, a thermoplastic polymer is fed via a hopper into an extruder 12 where the thermoplastic polymer is melted into a liquid polymer. The molten liquid polymer is fed into a spinneret 14 and then spun via a spinning nozzle 16 together with hot air into an electric field. The electric field is generated between the spinning nozzle 16 applied with voltage and a collector 18. Nano fibers spun onto the collector 18 are collected in the form of a web by a vaccum blower 20.

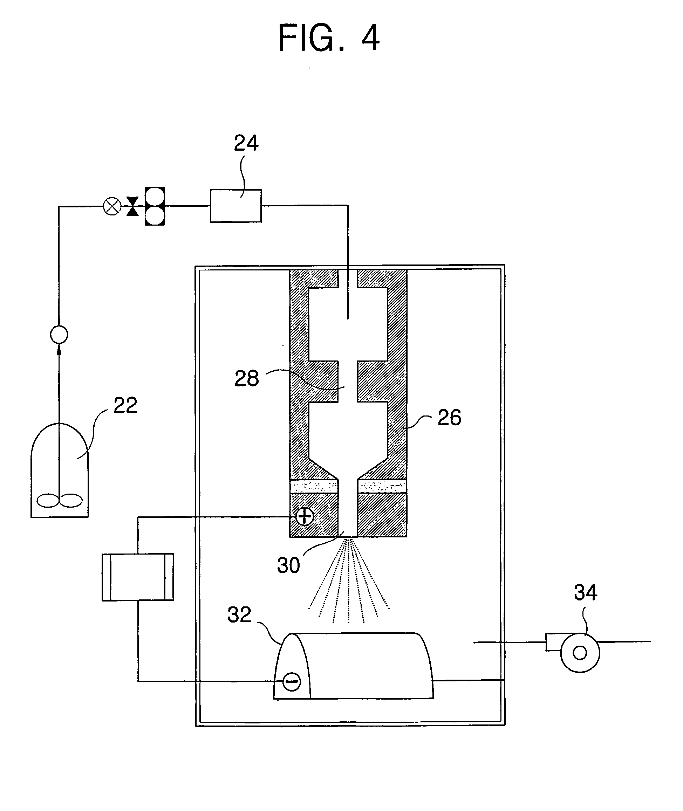

Also Korean Laid-Open Patent Application Serial No. 10-2001-31587 discloses that nanofiber in nanometer scale can be mass-produced with high productivity and yield by systematically combining the flash spinning and the electrostatic spinning. Fig. 4 schematically shows a process for explaining this technology. Referring to Fig 4, a polymer solution is fed from a storage tank 22 into a spinneret 26 with a compression pump 24, and spun into an electric field via a decompressing orifice 28 and then via a spinning nozzle 30. The electric field is generated between the spinning nozzle 30 applied with voltage and a collector 32. Nanofibers spun onto the collector 32 are collected in the form of a web by a vaccum blower 34.

It can be understood that the nanofiber webs composed of nanofiber can be prepared according to the two technologies as above.

However, the foregoing conventional technologies have many drawbacks in that insulation is not readily realized, applicable resin is restricted and heating is needed.

The present invention has been made to solve the foregoing problems and it is therefore an object of the present invention to provide a nanofiber web preparing method
in which both of thermoplastic and thermosetting resins are applicable, the polymer solution doesn't need to be heated and insulation is readily realized.

It is another object of the invention to provide a nanofiber web preparing apparatus for realizing the above preparing method.

According to and the invention to obtain the above objects there are provided a nanofiber web preparing method and
a nanofiber web preparing apparatus
as defined in the appended claims.

### Brief Description of the Drawings

Fig. 1 shows a construction of a nanofiber web preparing apparatus of the invention;
Fig. 2A is a sectional view of a spinneret having an air nozzle on a knife edge;
Fig. 2B is a sectional view of another spinneret having a cylindrical air nozzle;
Fig. 3 schematically shows a nanofiber preparing process via systematic combination of melt-blown spinning and electrostatic spinning; and
Fig. 4 schematically shows a nanofiber preparing process via systematic combination of flash spinning and electrostatic spinning.

### Best Mode for Carrying Out the Invention

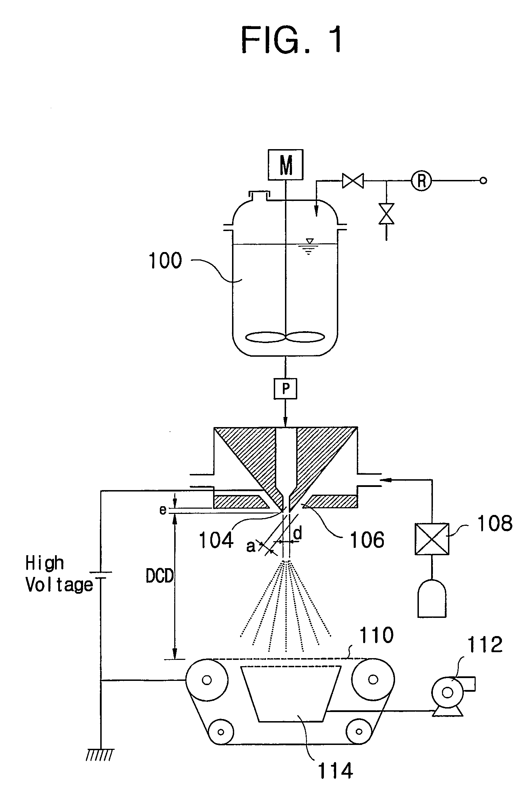

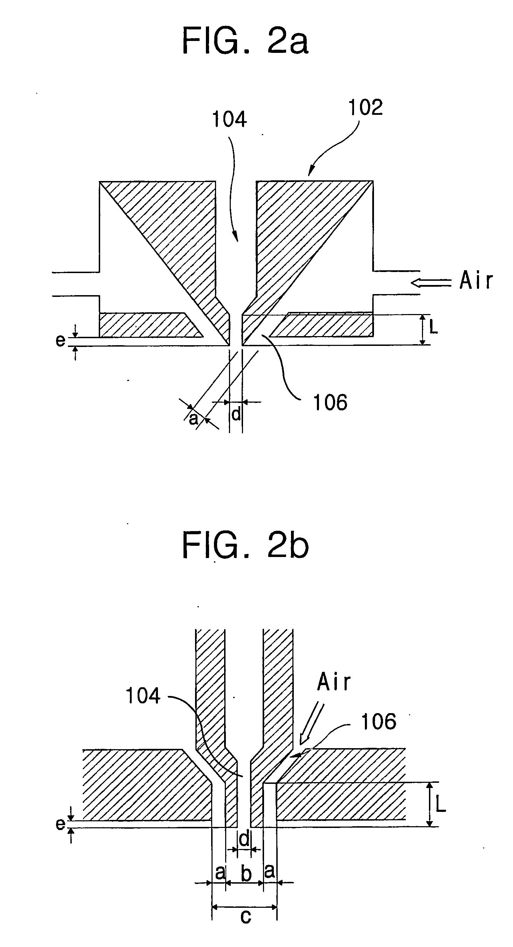

Fig. 1 shows a construction of a nanofiber web preparing apparatus of the invention for illustrating a nanofiber web preparing process, and Figs. 2A and 2B show nozzle constructions for illustrating spinning nozzles and air nozzles. The nanofiber web preparing process will be described in detail in reference to Figs. 1 to 2B.

A storage tank 100 prepares a polymer solution by combination of polymer and solvent. Polymers available for the invention are not restricted to thermoplastic resin, but may utilize most synthetic resins such as thermosetting resin. Examples of the available polymers may include polyimide, nylon, polyaramide, polybenzimidazole, polyetherimide, polyacrylonitrile, PET (polyethylene terephthalate), polypropylene, polyaniline, polyethylene oxide, PEN (polyethylene naphthalate), PBT (polybutylene terephthalate), SBR (styrene butadiene rubber), polystyrene, PVC (polyvinyl chloride), polyvinyl alcohol, polyvinylidene chloride, polyvinyl butylene and copolymers or derivative compounds thereof. The polymer solution is prepared by selecting a solvent according to the above polymers. Although the apparatus shown in Fig. 1 adopts a compression arrangement which forcibly blows compressed air or nitrogen gas into the storage tank 100 in order to feed the polymer solution from the storage tank 100, any known means can be utilized without restricting feed of the polymer solution. The polymer solution can be mixed with additives including any resin compatible with an associated polymer, plasticizer, ultraviolet ray stabilizer, crosslink agent, curing agent, reaction initiator and etc. Although dissolving most of the polymers may not require any specific temperature ranges, heating may be needed for assisting the dissolution reaction.

The polymer solution is discharged from the storage tank 100 via a spinning nozzle 104 of a spinneret 102 which is electrically insulated and applied with a high-voltage. After heating in an air heater 108, compressed air is injected via air nozzles 106 disposed of the spinning nozzle 104.

Now reference will be made to Figs. 2A and 2B each illustrating the construction of the spinning nozzle 104 and the air nozzle 106 in the spinneret 102. Fig. 2A shows the same construction as in Fig. 1 in which the air nozzle 106 is disposed on a knife edge at both sides of the spinning nozzle 104. In the spinning nozzle 104 shown in Fig. 2A, the polymer solution flows into the spinning nozzle 104 through an upper portion thereof and is injected past a capillary tube in the lower end. Since a number of spinning nozzles 104 of the above construction are arranged in a line at given interval while a number of air nozzles 106 may be arranged on knife edges at both sides of the spinning nozzles 104 parallel to the arrangement thereof, nanofiber can be advantageously spun with the number of spinning nozzles 104. Referring to preferred magnitudes of the components, the air nozzles 106 each have an air gap a which is suitably sized in the range of 0.1 to 5mm and preferably of 0.5 to 2mm, whereas the lower end capillary tube has a diameter d which is suitably sized with in the range of 0.1 to 2.0mm and preferably of 0.2 to 0.5mm. The lower end capillary tube of the air nozzle 106 suitably has a length-to-diameter ratio L/d, which is in the range of 1 to 20 and preferably 2 to 10. A nozzle projection e has a length corresponding to the difference between the lower end of air nozzle 106 and the lower end of spinning nozzle 104, and functions to prevention pollution of the spinning nozzle 104. The length of the nozzle projection e is preferably -5 to 10mm, and more particularly 0 to 10mm.

The spinning nozzle 104 shown in Fig. 2B has a construction which is substantially equivalent to that shown in Fig. 2A while the air nozzle 106 has a cylindrical structure circularly surrounding the spinning nozzle 104, in which compressed air is uniformly injected from the air nozzle 106 around nanofiber, which is spun through the spinning nozzle 104, so as to have an advantageous orientation over the construction of Fig. 2A, i.e. the air nozzles on the knife edge. Where a number of spinning nozzles 104 are necessary, spinning nozzles 104 and air nozzles 106 of the above construction are arranged in the spinneret. However, a manufacturing process of this arrangement is more difficult than that in Fig. 2A.

Now referring to Fig. 1 again, the polymer solution discharged from the spinning nozzle 104 of the spinneret 102 is collected in the form of a web on a suction collector 110 under the spinning nozzle 104. The collector 110 is grounded, and designed to allow air through an air collecting tube 114 so that air can be sucked in through a high voltage region between the spinner nozzle 104 and the collector 110 by suction of a blower 112. Air sucked in by the blower contains solvent and thus a Solvent Recovery System (SRS, not shown) is preferably designed to recover solvent while recycling air through the same. The SRS may adopt a well-known construction.

In the above construction for the preparing process, portions to which voltage is applied or which are grounded are divided from other portions so that insulation is readily realized.

The invention injects compressed air through the air nozzle 106 while sucking air through the collector 110 so that nozzle pollution can be minimized as the optimum advantage of the invention. Although not described in the above, nozzle pollution acts as a severe obstructive factor in preparation processes via spinning except for the melt-blown spinning. The invention can minimize nozzle pollution via compressed air injection and suction. The nozzle projection e more preferably functions to clean nozzle pollution since compressed air injected by adjustment of the nozzle projection e can clean the nozzles.

Further, a certain form of substrate can be arranged on the collector to collect and combine a fiber web spun on the substrate so that the combined fiber web is used as a high-performance filter, wiper and so on. Examples of the substrate may include various non-woven cloths such as melt-blown non-woven cloth, needle punched and spunlaced non-woven cloth, woven cloth, knitted cloth and paper , and can be used without limitations so long as a nanofiber layer can be added on the substrate.

The invention has the following process conditions.

Voltage applied to the spinneret 102 is preferably in the range of 1 to 300kV and more preferably of 10 to 100kV. The polymer solution is discharged in a pressure ranging from 0.01 to 200kg/cm2 and preferably 0.1 to 20kg/cm2. This allows the polymer solution to be discharged in large quantities in an adequate manner for mass production. The process of the invention discharges the polymer solution with a high discharge rate of 0.1 to 5cc/min-hole as compared with electrostatic spinning methods.

Compressed air injected via the air nozzle 106 has a flow rate of 10 to 10,000m/min and preferably of 100 to 3,000m/min. Air temperature is preferably in the range of room temperature to 300°C and more preferably of room temperature to 100°C. A Die to Collector Distance (DCD), i.e. the distance between the lower end of the spinning nozzle 104 and the suction collector 110, is preferably 1 to 200cm and more preferably 10 to 50cm.

Hereinafter the present invention will be described in more detail in the following examples.

A polymer solution having a concentration of 20wt% was prepared using polyacronitrile (PAN) as a polymer and DMF as a solvent and then spun with the spinneret having knife edge air nozzles as shown in Fig. 1. The polymer solution was spun according to the following condition, in which a spinning nozzle had a diameter of about 0.25mm, L/d of the nozzle was 10, LCD was 200mm, spinning pressure was 6kg/cm2 and applied voltage was 50kV. D.C.

The spinneret on the knife edge constructed as in Fig. 1 was used in the following examples. The diameter of the spinning nozzle was 0.25mm, L/d of the nozzle was 10, and DCD was varied in examples 1 to 3 and set to 300mm in examples 4 to 10. The number of the spinning nozzles was 500, the width of a die was 750mm, the nozzle projection e was about 0 to 3mm, and the flow rate of compressed air was maintained at 300 to 3,000m/min in the air nozzle.

**Table 1**

| No | Polymer | Solvent | Conc. (%) | DCD (mm) | Spinning Pressure (kgf/cm2) | App. Voltage (kV) |
|---|---|---|---|---|---|---|
| Ex. 1 | PAN | DMF | 15 | 350 | 3 | 30 |
| Ex. 2 | PAN | DMF | 20 | 160 | 4 | 40 |
| Ex. 3 | PAN | DMF | 20 | 200 | 6 | 50 |
| Comp. Ex. 1 | PAN | DMF | 25 | | | |

Example 1 was good in fluidity and spinning ability, but poor in formation of web. Examples 2 and 3 were good in fluidity, spinning ability and formation of web. Examination of SEM pictures showed diameter distribution of about 500nm to 2µm. In particular, it can be seen in example 3 that uniform diameter distribution was in the range of 500nm to 1.2µm. In comparative example 1, it was difficult to prepare a PAN 25% solution and thus no result was obtained.

**Table 2**

| No | Spinning Pressure (kgf/cm²) | App. Voltage (kV) | Diam. Distribution (mm) |
|---|---|---|---|
| Ex. 4 | 3 | 21 | 933.96-1470 |
| Ex. 5 | 3 | 30 | 588.69-1000 |
| Ex. 6 | 2.9 | 40 | 500.9-970.8 |
| Ex. 7 | 3 | 60 | 397.97-520.85 |
| Ex. 8 | 3.1 | 80 | 280.01-831.60 |
| Ex.9 | 3.5 | 40 | 588.69-933.77 |
| Ex.10 | 4 | 40 | 633.9-1510 |

Table 2 reports conditions and their results of examples 4 to 10, which used nylon 66 for polymer, formic acid for solvent Polymer solution had a concentration of 25%. Diameter distributions in Table 2 are the result of SEM picture examination, in which nanofibers having a uniform diameter are irregularly arranged in the form of a web.

### Industrial Applicability

As set forth above, the present invention allows the web to be composed of nanofiber with a fiber fineness ranging from several nanometers to hundreds of nanometers. Also the preparing process of the invention has a higher discharge rate over the conventional electrostatic spinning thereby potentially mass producing nanofiber. Further, since a polymer solution is used, the invention has advantages in that the necessity of heating polymer is reduced and both thermoplastic and thermosetting resins can be used.

Moreover, in the arrangement used for the electro-blown spinning, the spinneret can be readily insulated while solvent can be recovered via suction.

## Claims

1. A method for preparing nanofiber webs comprising:
feeding a polymer solution to a spinning nozzle (104);
compressively discharging the polymer solution through the spinning nozzle, to which a high voltage is applied, while injecting compressed air through an air nozzle (106) positioned adjacent to the lower end of the spinning nozzle to form nanofibers, wherein the polymer solution is discharged through the spinning nozzle at a discharge rate of 0.1 to 5 cm³/min·hole and under a discharge pressure in the range of 0.01 to 200 kg/cm²; and
collecting the nanofibers on a grounded suction collector (110) under the spinning nozzle to form the nanofiber web.

2. The method of claim 1, wherein the high voltage applied to the spinning nozzle is 1 to 300 kV.

3. The method of claim 1, wherein the compressed air has a flow rate of 10 to 10,000 m/min and a temperature of room temperature to 300 °C.

4. The method of claim 3, wherein the compressed air has a temperature ranging from room temperature to 100°C.

5. The method of claim 1, wherein said nanofiber web is spun onto the collector.

6. The method of claim 1, wherein said nanofiber web is spun onto a substrate arranged on said collector.

7. The method of claim 1, wherein the polymer is selected from polyimide, nylon, polyaramide, polybenzimidazole, polyetherimide, polyacrylonitrile, polyethylene terephthalate, polypropylene, polyaniline, polyethylene oxide, polyethylene naphthalate, polybutylene terephthalate, styrene butadiene rubber, polystyrene, polyvinyl chloride, polyvinyl alcohol, polyvinylidene chloride, polyvinyl butylene and copolymers or derivative compounds thereof.

8. An apparatus for preparing a nanofiber web comprising:
a storage tank (100) for preparing a polymer solution;
a spinneret (102) connected to said storage tank and comprising at least one spinning nozzle (104) for discharging the polymer solution fed from the storage tank;
an air nozzle (106) disposed adjacent to the lower end of the spinning nozzle for injecting compressed air;
means for applying high voltage to the spinning nozzle; and
a grounded collector (110) for collecting spun nanofibers in the form of a web.

9. The apparatus of claim 8, further comprising a capillary tube in a lower portion of the spinning nozzle, wherein the capillary tube has a diameter of 0.1 to 2.0 mm and a ratio of length to diameter of 1 to 20.

10. The apparatus of claim 8, wherein the air nozzle for injecting compressed air is disposed on a knife edge at both sides of the spinning nozzle, and has a distance or air gap of 0.1 to 5.0 mm.

11. The apparatus of claim 8, wherein the air nozzle has a cylindrical shape for circularly surrounding the spinning nozzle and a width or air gap of 0.1 to 5.0 mm.

12. The apparatus of claim 9, wherein the distance from the lower end of the spinning nozzle to the collector is from 1 to 200 cm.

13. The apparatus of claim 8, further comprising a blower(112) for drawing air from a spinning space below the spinning nozzle into the collector.

14. The apparatus of claim 8, wherein the nozzle projection corresponding to the height difference between the lower end of the air nozzle and the lower end of the spinning nozzle, is from -5 to 10 mm.

15. The apparatus of claim 8, further comprising a pump for feeding the polymer solution from the storage tank to the spinning nozzle.

## Patentansprüche

1. Verfahren zur Herstellung von Nanofaservliesen, das die folgenden Schritte aufweist:
Zuführen einer Polymerlösung zu einer Spinndüse (104);
Ausstoßen der Polymerlösung unter Druck durch die Spinndüse, an die eine Hochspannung angelegt wird, während Druckluft durch eine Luftdüse (106) eingespritzt wird, die benachbart dem unteren Ende der Spinndüse positioniert ist, um Nanofasern zu bilden, wobei die Polymerlösung durch die Spinndüse mit einer Ausströmgeschwindigkeit von 0,1 bis 5 cm³/min.-Loch und unter einem Ausströmdruck im Bereich von 0,01 bis 200 kg/cm² ausgestoßen wird; und
Auffangen der Nanofasern auf einer geerdeten Ansaugauffangvorrichtung (110) unter der Spinndüse, um das Nanofaservlies zu bilden.

2. Verfahren nach Anspruch 1, bei dem die an die Spinndüse angelegte Hochspannung 1 bis 300 kV beträgt.

3. Verfahren nach Anspruch 1, bei dem die Druckluft eine Strömungsgeschwindigkeit von 10 bis 10000 m/min. und eine Temperatur von Raumtemperatur bis 300 °C aufweist.

4. Verfahren nach Anspruch 3, bei dem die Druckluft eine Temperatur aufweist, die im Bereich von Raumtemperatur bis zu 100 °C liegt.

5. Verfahren nach Anspruch 1, bei dem das Nanofaservlies auf die Auffangvorrichtung gesponnen wird.

6. Verfahren nach Anspruch 1, bei dem das Nanofaservlies auf ein Trägermaterial gesponnen wird, das auf der Auffangvorrichtung angeordnet ist.

7. Verfahren nach Anspruch 1, bei dem das Polymer ausgewählt wird unter: Polyimid, Nylon, Polyaramid, Polybenzimidazol, Polyetherimid, Polyacrylnitril, Polyethylenterephthalat, Polypropylen, Polyanilin, Polyethylenoxid, Polyethylennaphthalat, Polybutylenterephthalat, Styrol-Butadien-Kautschauk, Polystyrol, Polyvinylchlorid, Polyvinylalkohol, Polyvinylidenchlorid, Polyvinylbutylen und deren Copolymere oder Derivatverbindungen.

8. Vorrichtung zur Herstellung eines Nanofaservlieses, die aufweist:
einen Vorratsbehälter (100) für die Herstellung einer Polymerlösung;
eine Spinndüse (102), die mit dem Vorratsbehälter verbunden ist und mindestens eine Spinndüse (104) für das Ausstoßen der Polymerlösung aufweist, die vom Vorratsbehälter zugeführt wird;
eine Luftdüse (106), die benachbart dem unteren Ende der Spinndüse angeordnet ist, um Druckluft einzuspritzen;
eine Einrichtung für das Anlegen einer Hochspannung an der Spinndüse; und
eine geerdete Auffangvorrichtung (110) für das Auffangen der ersponnenen Nanofasern in der Form eines Vlieses.

9. Vorrichtung nach Anspruch 8, die außerdem ein Kapillarrohr in einem unteren Abschnitt der Spinndüse aufweist, wobei das Kapillarrohr einen Durchmesser von 0,1 bis 2,0 mm und ein Verhältnis der Länge zum Durchmesser von 1 bis 20 aufweist.

10. Vorrichtung nach Anspruch 8, bei der die Luftdüse für das Einspritzen von Druckluft auf einer Messerkante auf beiden Seiten der Spinndüse angeordnet ist und einen Abstand oder Luftspalt von 0,1 bis 5,0 mm aufweist.

11. Vorrichtung nach Anspruch 8, bei der die Luftdüse eine zylindrische Form für das kreisförmige Umschließen der Spinndüse und eine Breite oder einen Luftspalt von 0,1 bis 5,0 mm aufweist.

12. Vorrichtung nach Anspruch 9, bei der der Abstand vom unteren Ende der Spinndüse zur Auffangvorrichtung von 1 bis 200 cm beträgt.

13. Vorrichtung nach Anspruch 8, die außerdem ein Gebläse (112) für das Saugen von Luft aus einem Spinnraum unterhalb der Spinndüse in die Auffangvorrichtung aufweist.

14. Vorrichtung nach Anspruch 8, bei der der Düsenvorsprung, der dem Höhenunterschied zwischen dem unteren Ende der Luftdüse und dem unteren Ende der Spinndüse entspricht, von -5 bis 10 mm beträgt.

15. Vorrichtung nach Anspruch 8, die außerdem eine Pumpe für das Zuführen der Polymerlösung aus dem Vorratsbehälter zur Spinndüse aufweist.

## Revendications

1. Procédé de préparation de nappes de nanofibres, comprenant :
l'alimentation d'une solution polymère vers une buse de filage (104) ;
le déchargement sous pression de la solution polymère à travers la buse de filage, à laquelle une tension élevée est appliquée, tandis que de l'air comprimé est injecté à travers une buse à air (106) positionnée de manière adjacente à l'extrémité inférieure de la buse de filage pour former des nanofibres, dans lequel la solution polymère est déchargée à travers la buse de filage avec un débit allant de 0,1 à 5cm³/min.orifice et une pression de décharge comprise entre 0,01 et 200 kg/cm² ; et
la collecte des nanofibres sur un collecteur à aspiration (110) mis à la terre sous la buse de filage pour former la nappe de nanofibres.

2. Procédé selon la revendication 1, dans lequel la tension élevée appliquée à la buse de filage est comprise entre 1 et 300 kV.

3. Procédé selon la revendication 1, dans lequel l'air comprimé a un débit compris entre 10 et 10 000 m/min et une température comprise entre la température ambiante et 300°C.

4. Procédé selon la revendication 3, dans lequel l'air comprimé a une température comprise entre la température ambiante et 100°C.

5. Procédé selon la revendication 1, dans lequel ledit tissu de nanofibres est filé sur le collecteur.

6. Procédé selon la revendication 1, dans lequel ledit tissu de nanofibres est filé sur un substrat disposé sur ledit collecteur.

7. Procédé selon la revendication 1, dans lequel le polymère est choisi parmi le polyimide, le nylon, le polyaramide, le polybenzimidazole, le polyétherimide, le polyacrylonitrile, le polyéthylène téréphtalate, le polypropylène, la polyaniline, l'oxyde de polyéthylène, le polyéthylène naphtalate, le polybutylène téréphtalate, le caoutchouc styrène-butadiène, le polystyrène, le chlorure de polyvinyle, l'alcool polyvinylique, le chlorure de polyvinylidène, le polyvinyle butylène et des copolymères ou composés dérivés de ceux-ci.

8. Dispositif de fabrication d'un tissu de nanofibres, comprenant:
une cuve de stockage (100) pour préparer une solution polymère ;
une filière (102) connectée à ladite cuve de stockage et comprenant au moins une buse de filage (104) pour décharger la solution polymère alimentée depuis la cuve de stockage ;
une buse à air (106) disposée de manière adjacente à l'extrémité inférieure de la buse de filage pour injecter de l'air comprimé ;
un moyen pour appliquer une tension élevée à la buse de filage ; et
un collecteur (110) mis à la terre pour collecter les nanofibres filées sous la forme d'une nappe.

9. Dispositif selon la revendication 8, comprenant, en outre, un tube capillaire dans une partie inférieure de la buse de filage, dans lequel le tube capillaire a un diamètre compris entre 0,1 et 2,0 mm et un rapport entre la longueur et le diamètre allant de 1 à 20.

10. Dispositif selon la revendication 8, dans lequel la buse à air servant à injecter l'air comprimé est disposée sur une arête coupante sur les deux côtés de la buse de filage et présente une distance ou écartement compris entre 0,1 et 5,0 mm.

11. Dispositif selon la revendication 8, dans lequel la buse à air a une forme cylindrique pour entourer la buse de filage de manière circulaire et présente une largeur ou écartement compris entre 0,1 et 5,0 mm.

12. Dispositif selon la revendication 9, dans lequel la distance entre l'extrémité inférieure de la buse de filage et le collecteur est comprise entre 1 et 200 cm.

13. Dispositif selon la revendication 8, comprenant, en outre, une soufflante (112) pour aspirer l'air provenant d'un espace de filage au-dessous de la buse de filage dans le collecteur.

14. Dispositif selon la revendication 8, dans lequel la saillie de buse correspondant à la différence de hauteur entre l'extrémité inférieure de la buse à air et l'extrémité inférieure de la buse de filage mesure entre -5 et 10 mm.

15. Dispositif selon la revendication 8, comprenant, en outre, une pompe pour alimenter la solution polymère de la cuve de stockage vers la buse de filage.
